# EUROPÄISCHE PATENTSCHRIFT

(11) **EP 1 605 117 B1**
(45) Veröffentlichungstag und Bekanntmachung des Hinweises auf die Patenterteilung: **07.04.2010**
(21) Anmeldenummer: 05012508.7
(22) Anmeldetag: 10.06.2005
(51) Int. Cl.: E04H 17/00

(54) **Kleintierschutzzaun und Befestigungsvorrichtung dafür**
Protection fence for small animals and connection device therefor
Clôture de protection pour petits animaux et dispositif de mise en place

(30) Priorität: 11.06.2004 DE 202004009266 U
(43) Veröffentlichungstag der Anmeldung: 14.12.2005
(73) Patentinhaber: Stukenborg, Christine, 28816 Stuhr (DE)
(72) Erfinder: Stukenborg, Christine, 28816 Stuhr (DE)
(74) Vertreter: Eisenführ, Speiser & Partner

(56) Entgegenhaltungen:
- DE-A1- 4 241 202
- FR-A- 2 568 615
- US-A- 5 143 354
- US-A- 5 547 322
- US-A- 6 045 099
- US-B1- 6 206 347
- US-B1- 6 382 596

## Beschreibung

Die Erfindung betrifft eine Kleintierschutzvorrichtung mit einem Sperrnetz zum Absperren eines Durchgangsweges für Kleintiere.

Ein Problem bei der Kleintierhaltung, insbesondere der Kleintierhaltung im Stadtumfeld, besteht darin, dass dafür Sorge getragen werden muss, dass die Kleintiere nicht aus dem für sie vorgesehenen Aufenthaltsbereich entweichen. Dies ist erforderlich, um Kleintiere einerseits davor zu schützen, durch äußere Einflüsse wie Straßenverkehr oder natürliche Feinde Schaden zu nehmen. Andererseits besteht insbesondere bei Haltung von Kleintieren in mehrstöckigen Häusern die Gefahr, dass sich die Kleintiere durch den Sturz aus Fenstern oder von Balkonen verletzen.

Es ist bekannt, den Aufenthaltsbereich von Kleintieren durch Einhegung mit gespannten Netzen zu sichern, um hierdurch die Kleintiere am Verlassen dieses Aufenthaltsbereichs zu hindern. Hierzu werden regelmäßig aus der Nutztierhaltung bekannte Absperrnetze verwendet, die an einem mehrteiligem Halter mit einem Befestigungsteil zur Befestigung des Halters an einem Zaun o.ä. und einen an diesem Befestigungsteil gelenkig befestigtem Netzhalteabschnitt fixiert werden.

Diese Absperrvorrichtungen weisen den wesentlichen Nachteil auf, dass sie sehr viel Raum einnehmen und daher insbesondere bei beengten Platzverhältnissen nicht verwendbar sind. Ein weiterer Nachteil der bekannten Absperrvorrichtung besteht darin, dass diese keine sichere Absperrung für Kleintiere darstellen und insbesondere von Katzen überwunden werden können.

Die bekannten Absperrvorrichtungen weisen den weiteren Nachteil auf, dass sie zur Erzielung einer ausreichenden Absperrsicherheit sehr groß bemessen werden müssen, was in vielen Anwendungen nicht möglich oder nicht wünschenswert ist.

Die bekannten Absperrvorrichtungen haben darüber hinaus den weiteren Nachteil, dass sie nur mit großem Aufwand zu montieren sind und hierdurch die Montage erschwert und verteuert wird.

Schließlich weisen die bekannten Absperrvorrichtungen den Nachteil auf, dass sie ausgebildet sind, um mittels Schrauben und Dübeln oder Nägeln fest am Gebäude verankert zu werden und daher laut deutscher Rechtsprechung regelmäßig der Genehmigung durch den Vermieter bzw. die Hausgemeinschaft bedürfen.

US 6,206,347 B1 offenbart ein Sicherheitszaunsystem für Jugendliche. Der Zaun weist mehrere Pfosten auf, welche im Erdreich zu fixieren sind. Zwischen den Pfosten sind mehrere Leisten und ein Netz angeordnet, wobei das Netz mittels Spannungsleisten an den Pfosten fixiert ist. Der Zaun weist ferner ein Mittel auf welches verhindert, dass ein an einem Pfosten befestigtes Ende des Netzes manipuliert bzw. entfernt werden kann.

Der Erfindung lag die Aufgabe zugrunde, eine Befestigungsvorrichtung für eine Tierschutzvorrichtung und eine Tierschutzvorrichtung bereitzustellen, welche zumindest eines der vorgenannten Probleme verringert oder bestenfalls vermeidet.

Diese Aufgabe wird durch eine Tierschutzvorrichtung nach Anspruch 1 gelöst.

Die erfindungsgemäße Vorrichtung ermöglicht einerseits eine besonders einfache Montage im Bereich von Gebäuden, Zäunen, Mauern o.ä., indem der Befestigungsabschnitt mittels eines Verbindungselementes wie beispielsweise einer Schraube ggf. mit Dübel, im Mauerwerk, im Holz o.ä. befestigt wird. Andererseits kann die Befestigung an Balkonen, Maschendraht- und anderen Zäunen aber auch mittels jederzeit zu lösenden Ratschenbändern erfolgen, was eine Montage ohne baulichen Eingriff am Gebäude selbst und zudem die Mobilität des Systems und die daraus resultierende Genehmigungsfreiheit bei der Anbringung ermöglicht.

Die erfindungsgemäße Befestigungsvorrichtung weist darüber hinaus den Vorteil auf, dass durch die einstückige Verbindung des Sperrnetzhaltebabschnitts und des Befestigungsabschnitts eine versehentlich falsche Ausrichtung des Sperrnetzes verhindert wird und folglich eine stets sichere Sperrwirkung erzielt wird. Schließlich weist die erfindungsgemäße Befestigungsvorrichtung den Vorteil auf, dass sie in der Herstellung kostengünstiger als bekannte Lösungen ist und zugleich robuster und unempfindlicher gegenüber äußeren Einflüssen.

Eine erste vorteilhafte Fortbildung besteht darin, dass der Stab an zwei voneinander beabstandeten Stellen entgegengesetzt zueinander solcherart abgewinkelt ist, dass die Endbereiche des Stabes etwa parallel zueinander liegen. Auf diese Weise wird eine Z-Form des Stabes erzielt mit einem stumpfen oder spitzen Winkel zwischen den jeweils zueinander abgewinkelten Stababschnitten. Es hat sich gezeigt, dass eine solche Form besonders vorteilhaft ist, um Kleintiere am Überwinden einer mittels der Befestigungsvorrichtung befestigten Kleintierschutzvorrichtung zu hindern. Die Ausführungsform weist darüber hinaus den Vorteil auf, dass sie insbesondere an vertikal stehenden Flächen besonders vorteilhaft montiert werden kann, ohne dabei den umhegten Aufenthaltsbereich mehr als erforderlich einzuschränken.

Besonders vorteilhaft ist es dabei, wenn der Stab an den zwei voneinander beabstandeten Stellen um jeweils 20° - 40° abgewinkelt ist, vorzugsweise 27°. Diese Geometrie hat sich als einerseits ausreichend sicher zum Hindern der Kleintiere an der Überwindung gezeigt und dringt darüber hinaus im Vergleich zu bekannten Vorrichtung nur in geringerem Maß in den umhegten Aufenthaltsbereich ein.

Erfindungsgemäß besteht der Stab zumindest in einem Bereich aus einem elektrisch nichtleitenden Material und ist vorzugsweise vollständig nichtleitend. Diese Ausführungsform verhindert einerseits die ungewünschte Einleitung elektrischer Spannungen in die Befestigungsvorrichtung und das Absperrnetz. Darüber hinaus erlaubt diese Ausführungsform den Einsatz elektrifizierter Netze oder unisolierter elektrischer Leitungen, um die Sicherheit gegen Überwindung der Kleintierschutzvorrichtung weiter zu erhöhen. Dabei kann der Stab beispielsweise in einem Abschnitt oder vollständig aus einem nichtleitenden Material hergestellt sein oder der Stab kann beispielsweise in einem Abschnitt oder vollständig mit einem nichtleitenden Material beschichtet sein. Für diese Ausführungsform eigenen sich insbesondere nichtleitende Kunststoffe.

Es ist weiterhin bevorzugt, wenn der Stab mindestens zwei voneinander beabstandete Bohrungen aufweist zum Befestigen eines Sperrnetzes. Solche Bohrungen sind besonders vorteilhaft, um darin ein Sperrnetz zu befestigen. Dies kann in einfachster Weise mittels eines Seilabschnitts, Kabelbinders o.ä. erfolgen. Weiterhin können Schrauben, Nieten, Clips o.ä. verwendet werden.

Dabei ist bevorzugt, wenn der Stab eine Vielzahl entlang der Längsachse des Stabes angeordneter und voneinander beabstandeter Bohrungen aufweist, vorzugsweise über die gesamte Länge des Stabes angeordnete Bohrungen. Eine solche Vielzahl von Bohrungen ermöglicht einerseits eine besonders sichere und variable Befestigung des Sperrnetzes an dem Stab. Weiterhin wird durch die Vielzahl von Bohrungen eine besonders einfache und variable Befestigung an einem Gebäude o.ä. erreicht. Die Bohrungen für die Netzbefestigung sind dabei vorzugsweise entlang der Mittelachse des Stabes angeordnet und sind in regelmäßigen Abständen zueinander angeordnet. Dahingegen können die Bohrungen für die Befestigung des Stabes an Mauern o.ä. auch aussermittig angeordnet sein, beispielsweise als beidseitige aussermittige Mehrfachlochung, vorzugsweise als Vierfachlochung. Vorzugsweise sind diese Bohrungen in vertikaler Richtung beabstandet von den Bohrungen für die Netzbefestigung angeordnet, so dass ein Kontakt zwischen einem mittels einer Netzbefestigungsbohrung befestigten, etwa horizontal verlegten elektrischen Leiter und einem durch eine Stabbefestigungsbohrung geführten Befestigungsmittel, beispielsweise einer Schraube, vermieden wird.

Es ist weiterhin bevorzugt, wenn der Stab zumindest einen elastischen Abschnitt aufweist, der eine elastische Verformung des Stabes erlaubt, wenn der Stab mit dem Gewicht eines Kleintiers belastet wird. Ein Problem bei Befestigungsvorrichtungen der eingangs genannten Art besteht darin, dass diese einerseits möglichst wenig Platz einnehmen sollen, um hierdurch den Bewegungsraum innerhalb des umhegten Bereichs nicht zu beschränken, andererseits aber einen möglichst guten Schutz gegen Übersteigen durch Kleintiere gewährleisten sollen. Kleintiere werden versuchen, an einem Sperrnetz, das an der Befestigungsvorrichtung befestigt ist, hochzusteigen, um das Sperrnetz so zu überwinden.

Diese Problematik wird durch den zuvor beschriebenen elastischen Abschnitt gelöst. Dabei kann entweder nur ein Teil oder auch der gesamte Stab elastisch so verformt werden, dass die gewünschte Wirkung auftritt. Durch diese elastische Verformung wird erreicht, dass der Stab sich dann, wenn ein Kleintier am Netz oder am Stab hochklettert, so verformt, dass dieses Netz in Schwerkraftrichtung abgesenkt, insbesondere abgewinkelt wird und dadurch der Neigungswinkel des Stabes bzw. des Sperrnetzes so groß wird, d.h. das Spernetz so flach angeordnet ist, dass ein Überklettern durch das Kleintier nicht mehr möglich ist. Durch diese vorübergehende Neigung des Stabes wird zwar vorübergehend ein größerer Raum durch den Stab bzw. das Sperrnetz, welches daran befestigt ist, eingenommen, jedoch ist dies nur vorübergehend und tritt nach der elastischen Rückverformung des Stabes nicht mehr auf, sobald das Kleintier das Sperrnetz - notgedrungen - wieder in Richtung des umhegten Bereichs verlassen hat. Dabei ist es zweckmäßig, wenn die Elastizität des Stabes an das Gewicht der zu schützenden Kleintiere angepasst wird. Typischerweise ist es sinnvoll, beispielsweise wenn Katzen geschützt werden sollen, die Verformung bei einer Belastung mit etwa 4 Kg eintreten zu lassen.

Dabei kann diese Ausführungsform weiter verbessert werden, indem die elastische Verformung so groß ist, dass der Stab sich im montierten Zustand gegenüber einer ersten Winkelposition mit einem ersten Abschrägungswinkel zur Senkrechten so weit verformt, dass sich eine zweite Winkelposition einstellt, in welcher ein etwa doppelt so großer Abschrägungswinkel zur Senkrechten besteht. Typischerweise wird der erfindungsgemäße Stab beispielsweise an einer Mauer, einem Balkongeländer oder einem Zaunpfahl befestigt. Dabei nimmt der Sperrnetzhalteabschnitt des Stabes zumindest in einem Abschnitt einen Winkel zur Senkrechten ein, der das Übersteigen durch ein Kleintier verhindert. Diese Wirkung kann verstärkt werden, indem sich der Winkel vorzugsweise verdoppelt, wenn ein Kleintier den Stab belastet. Insbesondere sollte diese Winkelverdoppelung dann eintreten, wenn das Gewicht des Kleintiers auf das Ende des Stabs einwirkt und sollte auf das typische, durchschnittliche Gewicht eines mit dem Stab bzw. dem Kleintierschutzzaun zu schützenden Tieres abgestimmt sein.

Die erfindungsgemäße Aufgabe wird gelöst durch eine Kleintierschutzvorrichtung der eingangs genannten Art, mit mindestens einer Befestigungsvorrichtung, wie zuvor beschrieben, an der das Sperrnetz befestigbar ist. Die erfindungsgemäße Befestigungsvorrichtung ermöglicht eine besonders vorteilhafte Anordnung und Ausrichtung des Sperrnetzes, bei der einerseits eine hohe Sicherheit gegen Überwinden der Kleintierschutzvorrichtung erreicht wird und weiterhin eine möglichst geringe Beeinträchtigung des umhegten Aufenthaltsbereichs auftritt.

Erfindungsgemäß ist mindestens eine Befestigungsvorrichtung mit einem elektrisch nichtleitenden Bereich wie zuvor beschrieben und ein elektrisch nichtleitendes Sperrnetz und zumindest ein im Bereich des Sperrnetzes angeordneter elektrisch nicht isolierter erster Leiter bereitgestellt, vorzugsweise einen Gleichspannungsleiter. Dabei ist darauf zu achten, dass der zumindest eine Elektroleiter im elektrisch nichtleitenden Bereich der Befestigungsvorrichtung mit dieser in Kontakt steht. Diese Ausführung erhöht die Sicherheit gegen Überwindung, indem das Kleintier durch negative Erfahrung von weiteren Überwindungsversuchen abgehalten wird.

Erfindungsgemäß ist weiter vorgesehen, dass mindestens ein elektrisch nicht isolierter zweiter Leiter, der beabstandet zum Sperrnetz angeordnet ist und gegenüber dem ersten elektrischen Leiter ein elektrisches Potential aufweist, vorhanden ist. Der zweite Leiter kann vorzugsweise hinter dem Sperrnetz angeordnet sein, das heißt, das Sperrnetz befindet sich zwischen dem zweiten Leiter und dem umhegten Bereich. Dabei wird bei Kontakt eines Kleintieres mit dem Sperrnetz der Stromkreis zwischen erstem und zweitem Leiter durch direkten Kontakt der Leiter miteinander oder durch Kontakt beider Leiter mit dem Kleintier geschlossen und so die gewünschte Stromwirkung erzielt. Auf diese Weise können auch bestehende Sperrnetze wirksam elektrisch nachgerüstet werden.

Dabei ist es erfindungsgemäß vorgesehen, dass mindestens zwei entgegengesetzt gepolte und voneinander beabstandete, elektrisch nicht isolierte Elektroleiter bereitgestellt sind, vorzugsweise Gleichspannungsleiter. Diese Leiter können am Netz befestigt sein, in das Netz eingearbeitet sein oder unmittelbar anliegend am Netz angeordnet sein. Alternativ kann auch ein Leiter am Netz befestigt sein und der andere Leiter beabstandet zum Netz angeordnet sein.

Besonders bevorzugt ist es dabei, wenn im Bereich des Sperrnetzes mehrere etwa horizontal verlaufende elektrisch nicht isolierte Elektroleiter angeordnet sind, wobei zwei benachbarte Elektroleiter entgegengesetzt gepolt sind. Hierdurch kann das gesamte Sperrnetz eine elektrische Abschreckung bewirken, wobei eine Anordnung von Leitern außerhalb des Netzes vermieden wird. Auf diese Weise kann die Wirksamkeit einer Elektrifizierung des Sperrnetzes über seine gesamte Höhe erzielt werden ohne dass das Tier Erdkontakt hat und somit die Überwindungssicherheit weiter gesteigert werden.

Es ist bevorzugt, dass der Abstand zwischen den Elektroleitern dem Abstand der Bohrungen in der Befestigungsvorrichtung entspricht. Dies erleichtert die Verlegung der Elektroleiter und die Montage des Sperrnetzes.

Schließlich sieht eine weitere Fortbildung der Erfindung mit mindestens zwei Elektroleitern vor, dass eine Spannungsquelle zur Versorgung der elektrischen Leiter mit einer Gleichspannung von 3.500V bis 5.500V, vorzugsweise 4.000V bereitgestellt ist. Diese Spannungsbereiche haben sich als einerseits ausreichend sicher gegen Überwindung und andererseits für die Gesundheit des Kleintieres ungefährlich erwiesen.

Eine weitere vorteilhafte Fortbildung der erfindungsgemäßen Kleintierschutzvorrichtung ist gekennzeichnet durch mindestens eine Befestigungsvorrichtung, weiterhin umfassend einen Befestigungsstift, der einen elastisch verformbaren Schaftabschnitt umfasst, der in die Bohrungen in der Befestigungsvorrichtung einführbar und durch elastische Rückverformung darin verriegelbar ist, und der einen einstückig mit dem Schaftabschnitt verbundenen Kopfabschnitt umfasst, der ausgebildet ist, um ein Sperrnetz zwischen sich und der Befestigungsvorrichtung zu halten, wenn der Befestigungsstift in der Bohrung eingesetzt ist. Ein solcher Befestigungsstift ermöglicht eine besonders einfache und sichere Montage des Sperrnetzes an der Befestigungsvorrichtung, indem das Sperrnetz formschlüssig und/oder reibschlüssig zwischen dem Kopfabschnitt des in eine Bohrung des Befestigungsvorrichtung eingeclipsten Befestigungsstiftes und der Befestigungsvorrichtung selbst gehalten wird. Dabei kann der Schaftabschnitt vorzugsweise so bemessen sein, dass er durch die Maschen des Sperrnetzes hindurchgeführt werden kann und der Kopfabschnitt ist vorzugsweise so bemessen, dass er nicht durch diese Maschen hindurchpasst.

Alternativ kann der Durchmesser des Kopfabschnitts auch kleiner sein als die Maschenweite des Netzes. Die Befestigung des Netzes wird dann dadurch erzielt, dass das Netz unter vertikaler Zugspannung stehend zwischen den Stiften eingespannt wird, sodass es mit einer Masche oberhalb des obersten Haltestiftes verläuft und mit einer Masche unterhalb des untersten Haltestiftes verläuft. In diesem Fall wird das Sperrnetz vorzugsweise am obersten Stift von oben eingehängt und am untersten Stift unter Spannung stehend von unten eingehängt. Die Stifte zwischen dem oberstem und dem unterstem Stift haben dann nur die Funktion, das" Flattern" des Netzes zu verhindern.

Springt ein Kleintier, beispielsweise eine Katze, in ein derart befestigtes Netz, so wird dieses ausschließlich durch die beiden äußeren Clips am Winkelstab gehalten, während es sich aus den Zwischenclips löst und somit ausbeult. Dies hat den Effekt, dass sich das Kleintier in diesem Fall nicht an einer stabilen Netzstruktur hochhangeln kann (was im Falle einer Nichtelektrifizierung des Netzes möglich wäre) sondern an einem extrem instabilen Netz hinge, welches sich über dem Kleintier nach unten ausbeult.

Diese Ausführungsform kann weiter fortgebildet werden, indem der Befestigungsstift eine radial ausgerichtete Durchgangsöffnung im Schaftabschnitt aufweist, zur Aufnahme eines elektrischen Leiters. Auf diese Weise ist eine besonders einfache und sichere Montage eines elektrischen Leiters möglich. Diese Ausführungsform ist besonders bevorzugt, wenn die Befestigungsvorrichtung zumindest abschnittsweise elektrisch nichtleitend ist. Mit dieser Fortbildung wird eine einfache Nachrüstung bereits montierter Kleintierschutzvorrichtungen mit einer Elektrifizierung ermöglicht und somit eine Erhöhung der Sicherheit bei bestehenden Systemen erzielt. Weiterhin können in der Durchgangsöffnung bevorzugt elektrische Leiter, in einem Abstand zum Sperrnetz verlegt, geführt werden die beispielsweise eine Erdung gegenüber einem elektrifiziertem Sperrnetz oder gegenüber im Bereich des Sperrnetzes verlegten elektrischen Leitern darstellen können.

Dabei kann in bestimmten Anwendungen vorteilhaft sein, wenn die radial ausgerichtete Durchgangsöffnung von zwei elastisch verformbaren Stegen begrenzt wird, deren Außenflächen weiter voneinander beabstandet sind als der Durchmesser der Bohrung in der Befestigungsvorrichtung und deren Außenfläche eine angeformte Verriegelungsfläche aufweist, die etwa entgegengesetzt zur Auflagefläche des Kopfabschnitts angeordnet ist. Ein solcher Befestigungsstift kann ohne Werkzeug in einer Bohrung der Befestigungsvorrichtung eingeclipst werden und ermöglicht eine sichere Befestigung eines elektrischen Leiters an der Kleintierschutzvorrichtung, wenn vor diesem Einclipsen der elektrische Leiter durch die Öffnung hindurchgeführt wird. Alternativ kann der elektrische Leiter nach Einclipsen des Befestigungsstiftes in die Bohrung durch den dann herausragenden Teil der Öffnung in dem Schaftabschnitt hindurchgezogen werden und auf diese Weise entlang der Kleintierschutzvorrichtung verlegt werden.

Besonders bevorzugt ist es dabei, wenn die radial ausgerichtete Durchgangsöffnung so weit von dem Kopfabschnitt beabstandet ist, dass ein durch die Durchgangsöffnung geführter elektrischer Leiter soweit von einem mittels des Befestigungsstiftes an der Befestigungsvorrichtung befestigten Sperrnetzes beabstandet ist, dass ein Kurzschluss zwischen dem elektrischen Leiter und dem Sperrnetz vermieden wird, wobei die Durchgangsöffnung beispielsweise 1-3cm, vorzugsweise 2cm, von dem Kopfabschnitt beabstandet ist. Auf diese Weise wird ein durch die Durchgangsbohrung geführter Leiter soweit beabstandet von dem Sperrnetz gehalten, dass bei üblichen Abständen der Befestigungsvorrichtungen voneinander und üblicher Spannkraft der Leiter und des Sperrnetzes ein Kurzschluss zwischen Leiter und Sperrnetz durch äußere Umwelteinflüsse, wie beispielsweise Wind, vermieden wird. Dabei muss der Abstand zwischen Kopfabschnitt und Durchgangsbohrung des Befestigungsstiftes umso größer gewählt werden, je weiter die Befestigungsstellen des Sperrnetzes und der Leiter, also insbesondere die Befestigungsvorrichtungen voneinander entfernt sind und je geringer die mechanische Vorspannung ist, mit der Sperrnetz und Leiter verlegt werden, um so einen größeren Sicherheitsabstand zwischen Leiter und Sperrnetz zu erreichen.

Schließlich ist es besonders bevorzugt, wenn das Sperrnetz eine konstante Maschenweite von 2cm - 7cm, vorzugsweise 5cm aufweist. Diese Maschenweite hat sich als besonders vorteilhaft für die Sicherheit der meisten Kleintiere, insbesondere von Katzen erwiesen, da sie einerseits ausreicht um ein Hindurchschlüpfen im elektrifizierten Zustand zu verhindern und andererseits durch ihre relative Großporigkeit die Sichtbehinderung bzw. auch die Sichtbarkeit der Gesamtanlage minimiert.

Eine weitere Fortbildung der erfindungsgemäßen Kleintierschutzvorrichtung zeichnet sich durch mehrere voneinander beabstandete und parallel zueinander verlaufende elektrische Leiter entweder in Netzform oder auch als Monolitzen verlegt, die nicht elektrisch miteinander verbunden sind und die vorzugsweise horizontal im montierten Sperrnetz verlaufen, aus. Hierdurch wird es einem Benutzer der Kleintierschutzvorrichtung ermöglicht, die Polung der einzelnen elektrischen Leiter individuell anzupassen. So können abwechselnd Erdungs- und Plusleiter geschaltet werden oder beispielsweise jeweils zwei nebeneinanderliegende, gleichgepolte Leiter abwechselnd angeordnet werden. Auf diese Weise kann die Kleintierschutzvorrichtung hinsichtlich ihrer Elektrifizierung exakt an bauliche Gegebenheiten und an die Größe der zu schützenden Kleintiere angepasst werden, und zudem sichergestellt werden, dass auch Kleintiere, die versuchen, das Netz zu überwinden und dabei keinen Bodenkontakt mehr haben, einen Abschreckungsimpuls erhalten, wenn sie einen Erdungs- und einen Plusleiter brücken.

Diese Fortbildung kann weiter verbessert werden durch zumindest einen elektrischen Verbindungsleiter, der eine Länge aufweist, die etwa dem einfachen Abstand oder etwa einem Vielfachen des Abstand der parallel zueinander verlaufenden Leiter entspricht, und die an jedem Enden mit jeweils einem der parallel zueinander verlaufenden Leiter verbindbar sind. Diese elektrischen Verbindungsleiter ermöglichen eine komfortable und variable Schutzstromschaltung, indem entweder direkt benachbarte Leiter miteinander verbunden werden oder Leiter miteinander verbunden werden, die durch einen, zwei oder mehr Leiter voneinander getrennt sind. So kann ein Benutzer in komfortabler Weise die gewünschte Verschaltung durch entsprechendes Verschalten der parallel zueinander verlaufenden Leiter mittels der elektrischen Verbindungsleiter erzielen.

Dabei ist es weiterhin bevorzugt, wenn der mindestens eine Verbindungsleiter so ausgebildet ist, dass er an mindestens einem Ende mit einem Ende eines anderen Verbindungsleiters elektrisch verbindbar ist. Auf diese Weise können vernetzte Schaltungen der Leiter aufgebaut werden, die eine sehr variable Verschaltung ermöglichen und beispielsweise dem Benutzer auch die Möglichkeit geben, drei benachbarte Leiter miteinander zu verbinden oder zwei benachbarte Leiter mit einem davon beabstandeten, entfernten dritten Leiter miteinander zu verbinden.

Schließlich kann die erfindungsgemäße Kleintierschutzvorrichtung fortgebildet werden durch ein Set von mehreren Verbindungsleitern unterschiedlicher Länge. Hierdurch wird eine komfortable Verschaltung in gewünschter Weise ermöglicht.

Eine bevorzugte Ausführungsform der Erfindung wird anhand der Figuren beschrieben.
Es zeigen:
Figur 1 eine perspektivische Ansicht einer erfindungsgemäßen Befestigungsvorrichtung, befestigt an einer Balkonbrüstung,
Figur 2 eine perspektivische Ansicht einer erfindungsgemäßen Kleintierschutzvorrichtung, befestigt an einer Balkonbrüstung,
Figur 3 eine perspektivische Ansicht einer erfindungsgemäßen Kleintierschutzvorrichtung, befestigt im Bereich einer Garage und eines Zaunes,
Figur 4 eine perspektivische Ansicht einer erfindungsgemäßen Kleintierschutzvorrichtung, befestigt im Bereich der Ecke eines Zaunes,
Figur 5 eine teilgeschnittene Seitenansicht eines Ausschnitts der erfindungsgemäßen Befestigungsvorrichtung mit einem erfindungsgemäßen Befestigungsstift, und
Figur 6 eine Darstellung eines Ausschnitts der erfindungsgemäßen Befestigungsvorrichtung mit eingeclipsten Befestigungsstiften und daran befestigter nichtisolierter elektrischer Leitung.

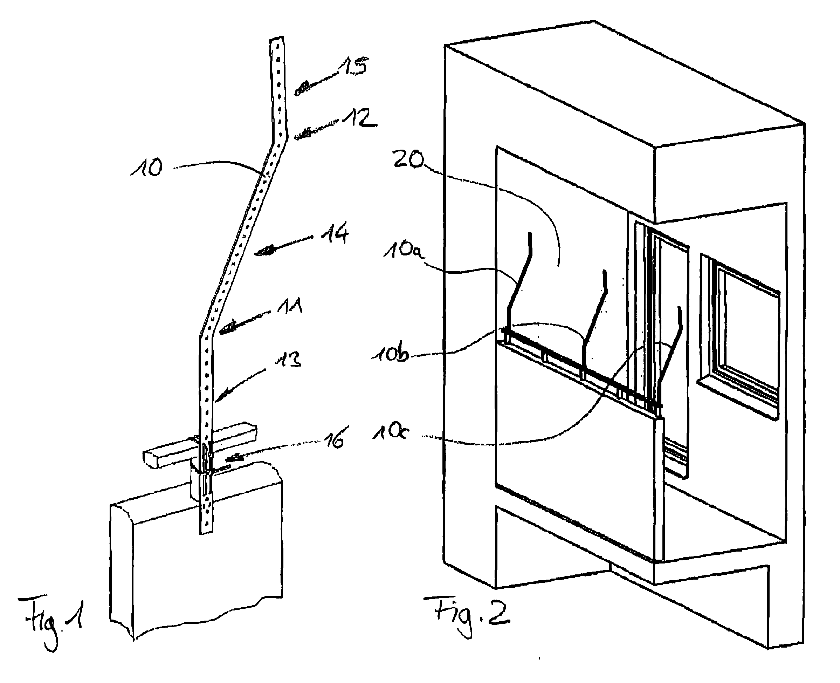

Bezugnehmend auf Figur 1 umfasst eine erfindungsgemäße Befestigungsvorrichtung einen Stab 10, der an zwei Stellen 11, 12 abgewinkelt ist.

Der Stab 10 ist in dem dargestellten Anwendungsfall ausgehend von einem vertikal stehenden erst geraden Abschnitt 13 an der Abwinkelungsstelle 11 in einer ersten Richtung um 27° abgewinkelt und verläuft dann wiederum in einem geraden Abschnitt 14 gegenüber der Vertikalen schräg geneigt bis zu der zweiten Abwinkelungsstelle 12, in der der Stab entgegengesetzt zur ersten Abwinkelung um 27° abgewinkelt ist, so dass ein dritter gerader Abschnitt 15 parallel zum ersten geraden Abschnitt 13 verläuft.

Der Stab 10 weist in allen drei Abschnitten 13, 14, 15 eine Vielzahl von Bohrungen auf, die entlang der Längsmittelachse des Stabes angeordnet und voneinander gleich beabstandet sind.

Der untere Bereich 16 des ersten Abschnitts 13 dient als Befestigungsbereich der erfindungsgemäßen Befestigungsvorrichtung an der Balkonbrüstung, Mauer oder Zaunpfosten. Hierzu wird, wie abgebildet, mittels durch die Bohrungen hindurchgefädelter Kabelbinder oder Drahtabschnitte, die um das Balkongeländer gebunden werden, eine Befestigung des Stabes 10 am Balkongeländer erzielt.

Figur 2 zeigt die Anwendung der erfindungsgemäßen Kleintierschutzvorrichtung an einem Balkon. Es kann erkannt werden, dass drei erfindungsgemäße Befestigungsvorrichtungen 10a, b, c an der Balkonbrüstung befestigt sind, beispielsweise solcherart, wie in Figur 1 dargestellt. Ein Sperrnetz 20, welches sich vorzugsweise über die gesamte Länge der Stäbe 10a-c erstreckt, ist zwischen den Stäben 10a-c gespannt. In diesem Fall dienen die drei Abschnitte 13, 14, 15 der Stäbe 10a, b, c als Spermetzhalteabschnitte.

Die Befestigungsvorrichtungen 10a, b, c sind solcherart an der Balkonbrüstung befestigt, dass die erste Abwinkelung 11 der Stäbe nach innen zum Balkon zeigt und ein Kleintier folglich, wenn es die Tierschutzvorrichtung gemäß Figur 2 überwinden wollte, an einem durch den schräggestellten Abschnitt 14 der Befestigungsstäbe 10a, b, c ausgebildeten Überhang entlang klettern müsste.

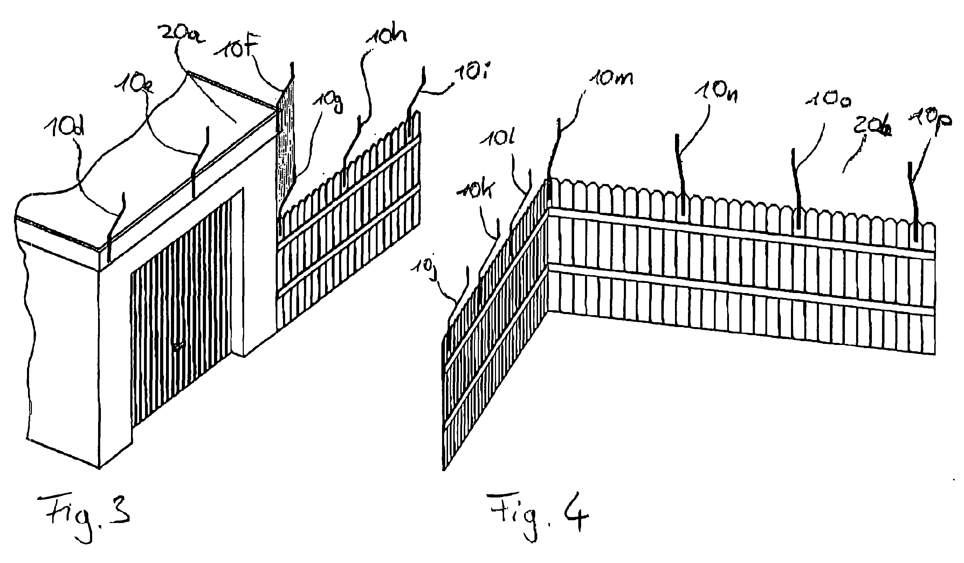

Figur 3 zeigt die Anwendung der erfindungsgemäßen Kleintierschutzvorrichtung im Bereich einer Garage und eines daran angrenzenden Zaunes. Es kann erkannt werden, dass an der Oberseite der Garagenfrontwand drei erfindungsgemäße Befestigungsvorrichtungen 10d-f solcherart befestigt sind, dass sie mit ihrer ersten Abwinklung schräg nach oben in den Bereich vor der Garage weisen. Im Bereich des Zaunes sind ebenfalls drei erfindungsgemäße Befestigungsvorrichtungen 10g-i angeordnet, die in gleicher Ausrichtung angeordnet sind wie die Befestigungsvorrichtungen 10d-f.

Die Befestigungsvorrichtungen 10f und 10e sind unmittelbar im Bereich der Grenze zwischen Garage und Zaun angeordnet, so dass ein Sperrnetz 20a zwischen diesen beiden Befestigungsvorrichtungen solcherart gespannt werden kann, dass es in den Bereich vor Garage und Zaun etwas vorsteht. Das Sperrnetz 10a ist weiterhin durchgehend von der Befestigungsvorrichtung 10d bis zur Befestigungsvorrichtung 10i gespannt und jeweils an jeder der sechs Befestigungsvorrichtungen 10d-i befestigt.

Figur 4 zeigt die Anwendung der erfindungsgemäßen Kleintierschutzvorrichtung im Bereich der Ecke eines Zaunes. Dargestellt sind an jedem der beiden in der Ecke aneinanderstoßenden Zaunabschnitte drei am Oberrand des Zaunes befestigte Befestigungsvorrichtungen 10j-l und 10n-p. Im Bereich der Ecke des Zaunes ist eine Befestigungsvorrichtung 10m angeordnet. Zwischen den sieben Befestigungsvorrichtungen 10j-p ist wiederum ein Sperrnetz 20b durchgehend gespannt, welches sich in den Bereich vor dem Zaun durch die Abwinklung der Befestigungsvorrichtungen 10j-p erstreckt.

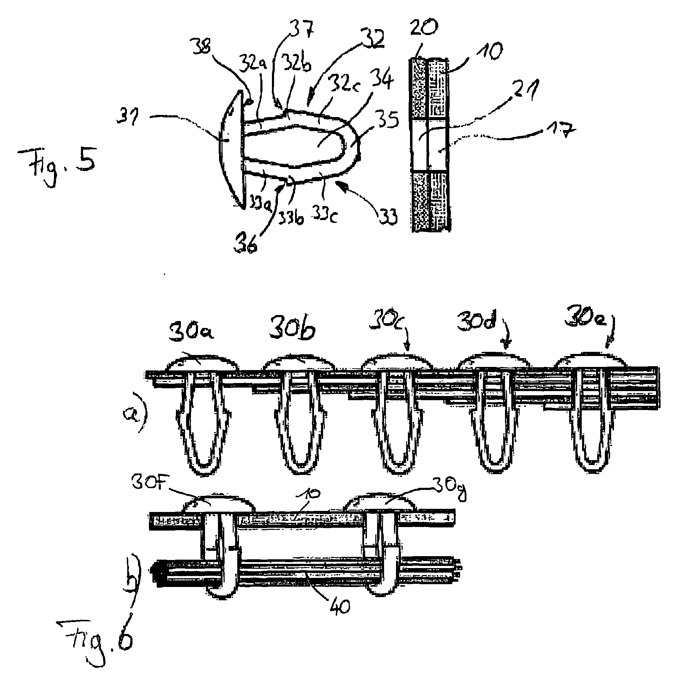

Anhand von Figur 5 wird schematisch die Befestigung des Sperrnetzes 20 an einer Befestigungsvorrichtung 10 mit Hilfe eines Befestigungsstiftes 30 erklärt. Dargestellt ist ein teilgeschnittener Ausschnitt der Befestigungsvorrichtung 10 mit einer darin angeordneten Bohrung 16. Das Sperrnetz 20 weist fluchtend zur Bohrung 16 eine Masche 21 auf, durch die der Schaftabschnitt des Stiftes geführt werden kann.

Der Befestigungsstift 30 umfasst einen Kopf 31, von dem aus sich zwei elastisch verformbare Stege 32, 33 angeformt sind. Die Stege 32, 33 begrenzen seitlich eine Bohrung 34.

Ausgehend von dem Kopf 31 laufen die Stege 32, 33 in einem ersten Abschnitt 32a, 33a zunächst divergent auseinander. In einem Verriegelungsbereich 32b, 33b sind die Schenkel 32, 33 abgewinkelt und laufen hierauf folgend in einem Schenkelabschnitt 32c, 33c konvergent aufeinander zu, um im Bereich der Befestigungsstiftspitze in einem abgerundeten Bereich 35 miteinander verbunden zu sein.

Im Abwinklungsbereich 32b, 33b sind an den Schenkeln 32, 33 Verriegelungsflächen 36, 37 angeformt, welche gegenüberliegend zur Kopfauflagefläche 38 liegen.

Der Befestigungsstift 30 wird mit der abgerundeten Spitze 35 voran in die Bohrung bzw. Masche 16, 21 eingeführt und soweit durchgeschoben, dass die Verriegelungsflächen 36, 37 auf der Rückseite der Befestigungsvorrichtung 10 im Bereich um die Bohrung 16 einschnappen. Zu dieser Wirkung ist es erforderlich, dass die divergent auseinanderlaufenden Abschnitte 32a, 33a eine Länge überbrücken, die der addierten Stärke des Sperrnetzes 20 und der Befestigungsvorrichtung 10 entsprechen oder diese übersteigen.

Figur 6a zeigt die Befestigung mehrerer Schichtlagen mittels der Befestigungsstifte 30. Ausgehend von links ist in einem ersten Befestigungsstift 30a eine Befestigungsvorrichtung und ein Sperrnetz eingeclipst. Hierzu kommen von links nach rechts bei den Befestigungsstiften 30b, c, d und e jeweils zusätzliche Sperrnetzlagen oder zusätzliche elektrische Leiter hinzu.

Figur 6b zeigt zwei Befestigungsstifte 30f und 30g, welche in jeweils eine Bohrung in einer Befestigungsvorrichtung 10 eingeclipst sind. Nach diesem Einclipsvorgang ist durch die Öffnungen in den Befestigungsstiften 30f, g eine elektrisch nichtisolierter Leiter 40 eingefädelt worden und verläuft so entlang der Verbindungslinie zwischen den beiden Befestigungsstiften 30f, g.

## Patentansprüche

1. Tierschutzvorrichtung für Kleintiere, mit einem Sperrnetz (20) zum Absperren eines Durchgangsweges für Tiere, weiterhin umfassend eine Befestigungsvorrichtung mit einem an einem Gebäude oder ähnlichem befestigbaren Befestigungsabschnitt (16) und einem mit dem Sperrnetz verbindbaren Sperrnetzhalteabschnitt (13, 14, 15), wobei der Befestigungsabschnitt und der Sperrnetzhalteabschnitt einstückig im Bereich der gegenüberliegenden Enden eines Stabes (10) ausgebildet sind,
**dadurch gekennzeichnet, dass** das Sperrnetz elektrisch nicht leitend ist, im Bereich des Sperrnetzes mindestens zwei entgegengesetzt gepolte und voneinander beabstandete, elektrisch nicht isolierte Elektroleiter angeordnet sind und der Stab zumindest in einem Bereich aus einem elektrisch nicht leitenden Material besteht, insbesondere mit einem nicht leitenden Material beschichtet ist.

2. Tierschutzvorrichtung nach Anspruch 1,
**dadurch gekennzeichnet, dass** der Stab (10) an zwei voneinander beabstandeten Stellen (11, 12) entgegengesetzt zueinander solcherart abgewinkelt ist, dass die Endbereiche (13, 15) des Stabes etwa parallel zueinander liegen.

3. Tierschutzvorrichtung nach Anspruch 2,
**dadurch gekennzeichnet, dass** der Stab an den zwei voneinander beabstandeten Stellen (11, 12) um jeweils 20°- 40° abgewinkelt ist, vorzugsweise 27°.

4. Tierschutzvorrichtung nach einem der vorhergehenden Ansprüche,
**dadurch gekennzeichnet, dass** der Stab zumindest in einem Bereich aus einem elektrisch nichtleitenden Material besteht, vorzugsweise vollständig nichtleitend ist.

5. Tierschutzvorrichtung nach einem der vorhergehenden Ansprüche,
**dadurch gekennzeichnet, dass** der Stab mindestens zwei voneinander beabstandete Bohrungen (17) zum Befestigen eines Sperrnetzes aufweist.

6. Tierschutzvorrichtung nach Anspruch 5,
**dadurch gekennzeichnet, dass** der Stab eine Vielzahl entlang der Längsachse des Stabes angeordneter und voneinander beabstandeter Bohrungen (17) aufweist, vorzugsweise über die gesamte Länge des Stabes angeordnete Bohrungen.

7. Tierschutzvorrichtung nach einem der vorhergehenden Ansprüche,
**dadurch gekennzeichnet, dass** der Stab zumindest einen elastischen Abschnitt aufweist, der eine elastische Verformung des Stabes erlaubt, wenn der Stab mit dem Gewicht eines Kleintiers belastet wird.

8. Tierschutzvorrichtung nach Anspruch 7,
**dadurch gekennzeichnet, dass** die elastische Verformung so groß ist, dass der Stab sich im montierten Zustand gegenüber einer ersten Winkelposition mit einem ersten Abschrägungswinkel zur Senkrechten so weit verformt, dass sich eine zweite Winkelposition einstellt, in welcher ein etwa doppelt so großer Abschrägungswinkel zur Senkrechten besteht.

9. Tierschutzvorrichtung nach einem der vorhergehenden Ansprüche,
**dadurch gekennzeichnet, dass** im Bereich des Sperrnetzes mehrere etwa horizontal verlaufende elektrisch nicht isolierte Elektroleiter (40) angeordnet sind, wobei zwei benachbarte Elektroleiter entgegengesetzt gepolt sind.

10. Tierschutzvorrichtung nach Anspruch 5 oder 6 und Anspruch 9,
**dadurch gekennzeichnet, dass** der Abstand zwischen den Elektroleitern dem Abstand der Bohrungen in der Befestigungsvorrichtung entspricht.

11. Tierschutzvorricfitung nach einem der vorhergehenden Ansprüche, mit mindestens einem Elektroleiter,
**gekennzeichnet durch** eine Spannungsquelle zur Versorgung des elektrischen Leiters mit einer Gleichspannung von 3.500V bis 5.500V, vorzugsweise 4.000V,

12. Tierschutzvorrichtung nach Anspruch 5 oder 6 und einem der vorhergehenden Ansprüche,
**gekennzeichnet durch** einen Befestigungsstift (30),
a. der einen elastisch verformbaren Schaftabschnitt (32, 33) umfasst, der in die Bohrungen (17) in der Befestigungsvorrichtung einführbar und **durch** elastische Rückverformung darin verriegelbar ist, und
b. der einen einstückig mit dem Schaftabschnitt verbundenen Kopfabschnitt (31) umfasst, der ausgebildet ist, um ein Sperrnetz (20) zwischen sich und der Befestigungsvorrichtung zu halten, wenn der Befestigungsstift in der Bohrung (17) eingesetzt ist.

13. Tierschutzvorrichtung nach Anspruch 12,
**dadurch gekennzeichnet, dass** der Befestigungsstift eine radial ausgerichtete Durchgangsöffnung (34) im Schaftabschnitt aufweist, zur Aufnahme eines elektrischen Leiters.

14. Tierschutzvorrichtung nach Anspruch 13,
**dadurch gekennzeichnet, dass** die radial ausgerichtete Durchgangsöffnung (34) von zwei elastisch verformbaren Stegen (32, 33) begrenzt wird, deren Außenflächen weiter voneinander beabstandet sind als der Durchmesser der Bohrung (17) in der Befestigungsvorrichtung und deren Außenfläche mindestens eine angeformte Verriegelungsfläche (36; 37) aufweist, die etwa entgegengesetzt zur Auflagefläche (38) des Kopfabschnitts (31) angeordnet ist.

15. Tierschutzvorrichtung nach Anspruch 12 bis 14,
**dadurch gekennzeichnet, dass** die radial ausgerichtete Durchgangsöffnung (34) so weit von dem Kopfabschnitt beabstandet ist, dass ein durch die Durchgangsöffnung geführter elektrischer Leiter soweit von einem mittels des Befestigungsstiftes an der Befestigungsvorrichtung befestigten Sperrnetzes beabstandet ist, dass ein Kurzschluss zwischen dem elektrischen Leiter und dem Sperrnetz vermieden wird, wobei die Durchgangsöffnung beispielsweise 1-3cm vorzugsweise 2 cm von dem Kopfabschnitt beabstandet ist.

16. Tierschutzvorrichtung nach einem der vorhergehenden Ansprüche,
**dadurch gekennzeichnet, dass** das Sperrnetz eine konstante Maschenweite von 2cm - 7cm, vorzugsweise 5cm aufweist.

17. Tierschutzvorrichtung nach einem der vorhergehenden Ansprüche,
**gekennzeichnet durch** mehrere voneinander beabstandete und parallel zueinander verlaufende elektrische Leiter, die nicht elektrisch miteinander verbunden sind und die vorzugsweise horizontal im montierten Sperrnetz verlaufen.

18. Tierschutzvorrichtung nach Anspruch 17,
**gekennzeichnet durch** zumindest einen elektrischen Verbindungsleiter, der etwa eine Länge aufweist, die etwa dem einfachen Abstand oder etwa einem Vielfachen des Abstand der parallel zueinander verlaufenden Leiter entspricht, und der an jedem Enden mit jeweils einem der parallel zueinander verlaufenden Leiter verbindbar sind.

19. Tierschutzvorrichtung nach Anspruch 18,
**dadurch gekennzeichnet, dass** der mindestens eine Verbindungsleiter so ausgebildet ist, dass er an seinem Enden mit einem Ende eines anderen Verbindungsleiters verbindbar ist.

20. Tierschutzvorrichtung nach Anspruch 18 oder 19,
**gekennzeichnet durch** ein Set von mehreren Verbindungsleitern unterschiedlicher Länge.

## Claims

1. Animal protection device for small animals, with a block net (20) for blocking a passageway for animals, further comprising a fastening device with a fastening portion (16) which can be fastened to a building or the like and a block net holding portion (13, 14, 15) which can be connected to the block net, the fastening portion and the block net holding portion being formed in one piece in the region of the opposing ends of a bar (10), **characterised in that** the block net is electrically non-conductive, at least two oppositely poled and mutually remote, electrically non-insulated electrical conductors are arranged in the region of the block net and the bar, at least in a region, is made of an electrically non-conductive material, in particular is coated with a non-conductive material.

2. Animal protection device according to claim 1, **characterised in that** the bar (10) is angled, at two mutually remote locations (11, 12) opposite each other, in such a way that the end regions (13, 15) of the bar are positioned roughly parallel to each other.

3. Animal protection device according to claim 2, **characterised in that** the bar is angled, at the two mutually remote locations (11, 12), by in each case 20° - 40°, preferably 27°.

4. Animal protection device according to one of the preceding claims, **characterised in that** the bar, at least in a region, is made of an electrically non-conductive material, preferably is completely non-conductive.

5. Animal protection device according to one of the preceding claims, **characterised in that** the bar has at least two mutually remote holes (17) for fastening a block net.

6. Animal protection device according to claim 5, **characterised in that** the bar has a large number of holes (17) which are arranged along the longitudinal axis of the bar and set apart from one another, preferably holes arranged over the entire length of the bar.

7. Animal protection device according to one of the preceding claims, **characterised in that** the bar has at least one elastic portion which allows elastic deformation of the bar when the bar is loaded with the weight of a small animal.

8. Animal protection device according to claim 7, **characterised in that** the elastic deformation is sufficiently great that the bar, when mounted, is deformed, in relation to a first angular position having a first bevel angle relative to the perpendicular, sufficiently far that a second angular position is set in which the bevel angle relative to the perpendicular is roughly twice as great.

9. Animal protection device according to one of the preceding claims, **characterised in that** a plurality of roughly horizontally extending, electrically non-insulated electrical conductors (40) are arranged in the region of the block net, two adjacent electrical conductors being oppositely poled.

10. Animal protection device according to claim 5 or 6 and claim 9, **characterised in that** the spacing between the electrical conductors corresponds to the spacing of the holes in the fastening device.

11. Animal protection device according to one of the preceding claims, with at least one electrical conductor, **characterised by** a power source for supplying the electrical conductor with a DC voltage of from 3,500 V to 5,500 V, preferably 4,000 V.

12. Animal protection device according to claim 5 or 6 and one of the preceding claims, **characterised by** a fastening pin (30)
a. comprising an elastically deformable shank portion (32, 33) which can be inserted into the holes (17) in the fastening device and can be locked therein by elastic recovery, and
b. comprising a head portion (31) which is integrally connected to the shank portion and is embodied to hold a block net (20) between itself and the fastening device when the fastening pin is inserted in the hole (17).

13. Animal protection device according to claim 12, **characterised in that** the fastening pin has a radially oriented through-opening (34) in the shank portion for receiving an electrical conductor.

14. Animal protection device according to claim 13, **characterised in that** the radially oriented through-opening (34) is delimited by two elastically deformable webs (32, 33), the outer surfaces of which are set further apart from each other than the diameter of the hole (17) in the fastening device and the outer surface of which has at least one moulded-on locking surface (36; 37) arranged roughly opposite the bearing surface (38) of the head portion (31).

15. Animal protection device according to claims 12 to 14, **characterised in that** the radially oriented through-opening (34) is set sufficiently far apart from the head portion that an electrical conductor guided through the through-opening is set sufficiently far apart from a block net fastened to the fastening device by means of the fastening pin as to prevent a short circuit between the electrical conductor and the block net, the through-opening being set apart from the head portion by for example 1 - 3 cm, preferably 2 cm.

16. Animal protection device according to one of the preceding claims, **characterised in that** the block net has a constant mesh width of from 2 cm - 7 cm, preferably 5 cm.

17. Animal protection device according to one of the preceding claims, **characterised by** a plurality of mutually remote electrical conductors which extended parallel to one another, are not electrically connected to one another and extend preferably horizontally in the mounted block net.

18. Animal protection device according to claim 17, **characterised by** at least one electrical connecting conductor which has a length corresponding roughly to the single spacing or roughly to a multiple of the spacing of the conductors extending parallel to one another and which can be connected at each end to one of the conductors extending parallel to one another.

19. Animal protection device according to claim 18, **characterised in that** the at least one connecting conductor is embodied so as to be connectable at its ends to an end of a different connecting conductor.

20. Animal protection device according to claim 18 or 19, **characterised by** a set of a plurality of connecting conductors of differing length.

## Revendications

1. Dispositif de protection d'animaux pour petits animaux, comprenant un filet d'arrêt (20) pour bloquer un chemin de passage pour les animaux, comprenant en outre un dispositif de fixation avec une portion de fixation (16) susceptible d'être fixée à un bâtiment ou analogue et une portion de maintien du filet d'arrêt (13, 14, 15) susceptible d'être reliée au filet d'arrêt, la portion de fixation et la portion de maintien du filet d'arrêt étant réalisées d'une seule pièce dans la région des extrémités opposées d'un barreau (10),
**caractérisé en ce que** le filet d'arrêt n'est pas conducteur de l'électricité, **en ce qu'**au moins deux conducteurs électriques de polarités opposées, écartés l'un de l'autre et dépourvus d'isolation électrique sont agencés dans la région du filet d'arrêt, et **en ce que** le barreau est réalisé, au moins dans une région, en un matériau non conducteur de l'électricité, en particulier **en ce qu'**il est revêtu d'un matériau non conducteur.

2. Dispositif de protection d'animaux selon la revendication 1,
**caractérisé en ce que** le barreau (10) est coudé à deux emplacements (11, 12) écartés l'un de l'autre et en sens mutuellement opposés de telle façon que les zones terminales (13, 15) du barreau sont disposées approximativement parallèlement l'une à l'autre.

3. Dispositif de protection d'animaux selon la revendication 2,
**caractérisé en ce que** le barreau est coudé sur respectivement 20° à 40°, de préférence 27°, aux deux emplacements (11, 12) écartés l'un de l'autre.

4. Dispositif de protection d'animaux selon l'une des revendications précédentes,
**caractérisé en ce que** le barreau est réalisé, au moins dans une région, en un matériau non conducteur de l'électricité, et est de préférence entièrement non conducteur.

5. Dispositif de protection d'animaux selon l'une des revendications précédentes,
**caractérisé en ce que** le barreau comporte au moins deux perçages (17) écartés l'un de l'autre pour la fixation d'un filet d'arrêt.

6. Dispositif de protection d'animaux selon la revendication 5,
**caractérisé en ce que** le barreau comporte une pluralité de perçages (17) agencés le long de l'axe longitudinal du barreau et écartés les uns des autres, de préférence des perçages agencés sur la totalité de la longueur du barreau.

7. Dispositif de protection d'animaux selon l'une des revendications précédentes,
**caractérisé en ce que** le barreau comporte au moins un tronçon élastique, qui permet une déformation élastique du barreau quand le barreau est chargé par le poids d'un petit animal.

8. Dispositif de protection d'animaux selon la revendication 7,
**caractérisé en ce qu'**à l'état monté la déformation élastique est si importante que, par rapport à une première position angulaire avec un premier angle d'inclinaison par rapport à la verticale, le barreau se déforme aussi fort qu'il occupe une deuxième position angulaire dans laquelle apparaît un angle d'inclinaison environ deux fois plus important par rapport à la verticale.

9. Dispositif de protection d'animaux selon l'une des revendications précédentes,
**caractérisé en ce que** plusieurs conducteurs électriques (40) s'étendant approximativement horizontalement et dépourvus d'isolation électrique sont agencés dans la région du filet d'arrêt, deux conducteurs électriques voisins étant de polarités opposées.

10. Dispositif de protection d'animaux selon la revendication 5 ou 6 et la revendication 9,
**caractérisé en ce que** la distance entre les conducteurs électriques correspond à la distance des perçages dans le dispositif de fixation.

11. Dispositif de protection d'animaux selon l'une des revendications précédentes, comprenant au moins un conducteur électrique,
**caractérisé par** une source de tension pour l'alimentation du conducteur électrique avec une tension continue de 3500 V à 5500 V, de préférence 4000 V.

12. Dispositif de protection d'animaux selon la revendication 5 ou 6 et l'une des revendications précédentes,
**caractérisé par** une broche de fixation (30) :
a) qui comprend un tronçon de tige (32, 33) élastiquement déformable, qui peut être introduit dans les perçages (17) dans le dispositif de fixation et peut être verrouillé dans ceux-ci par déformation de rappel élastique, et
b) qui comprend un tronçon de tête (31) relié d'un seul tenant avec le tronçon de tige, réalisé pour maintenir un filet d'arrêt (20) entre lui-même et le dispositif de fixation quand la tige de fixation est mise en place dans le perçage (17).

13. Dispositif de protection d'animaux selon la revendication 12,
**caractérisé en ce que** la tige de fixation comporte une ouverture traversante (34) orientée radialement dans le tronçon de tige, pour recevoir un conducteur électrique.

14. Dispositif de protection d'animaux selon la revendication 13,
**caractérisé en ce que** l'ouverture traversante (34) orientée radialement est délimitée par deux barrettes (32, 33) élastiquement déformables, dont les surfaces extérieures sont plus écartées l'une de l'autre que le diamètre du perçage (17) dans le dispositif de fixation, et dont la surface extérieure comporte au moins une surface de verrouillage conformée (36 ; 37) qui est agencée approximativement à l'opposé de la surface d'appui (38) du tronçon de tête (31).

15. Dispositif de protection d'animaux selon les revendications 12 à 14,
**caractérisé en ce que** l'ouverture traversante (34) orientée radialement est écartée aussi loin du tronçon de tête qu'un conducteur électrique passé à travers l'ouverture traversante se trouve à une distance aussi importante d'un filet d'arrêt fixé au moyen de la tige de fixation sur le dispositif de fixation qu'elle évite un court-circuit entre le conducteur électrique et le filet d'arrêt, ladite ouverture traversante étant écartée du tronçon de tête par exemple de 1 à 3 cm, de préférence 2 cm.

16. Dispositif de protection d'animaux selon l'une des revendications précédentes,
**caractérisé en ce que** le filet d'arrêt présente des mailles avec une taille constante de 2 cm à 7 cm, de préférence 5 cm.

17. Dispositif de protection d'animaux selon l'une des revendications précédentes,
**caractérisé par** plusieurs conducteurs électriques écartés les uns des autres et s'étendant parallèlement les uns aux autres, qui ne sont pas reliés électriquement les uns aux autres et qui s'étendent de préférence horizontalement dans le filet d'arrêt monté.

18. Dispositif de protection d'animaux selon la revendication 17,
**caractérisé par** au moins un conducteur électrique de liaison, qui présente une longueur qui correspond approximativement à une fois la distance ou approximativement un multiple de la distance des conducteurs s'étendant parallèlement les uns aux autres, et qui peut être connecté à chaque extrémité respectivement à l'un des conducteurs s'étendant parallèlement.

19. Dispositif de protection d'animaux selon la revendication 18,
**caractérisé en ce que** ledit au moins un conducteur de liaison est réalisé de telle façon qu'il peut être relié à ses extrémités à une extrémité d'un autre conducteur de liaison.

20. Dispositif de protection d'animaux selon la revendication 18 ou 19,
**caractérisé par** un jeu de plusieurs conducteurs de liaison de longueurs différentes.
